# EUROPEAN PATENT APPLICATION

(11) **EP 1 897 609 A2**
(43) Date of publication of application: **12.03.2008**
(21) Application number: 07017550.0
(22) Date of filing: 07.09.2007
(51) Int. Cl.: B01F 17/42, C08J 9/14

(54) **Shear thickening fluid containment in polymer composites**

(30) Priority: 07.09.2006 US 516956
(71) Applicant: UNIVERSITY OF DELAWARE, Newark, DE 19716-1551 (US)
(72) Inventor: Wagner, Norman, Newark Delaware 19711 (US); Kirkwood, John E., Stanford California 94305 (US); Egres, Ronald G. Jr., Midlothian Virginia 23113 (US)
(74) Representative: Luderschmidt, Schüler & Partner

(57) **Abstract**

Shear thickening fluid suspoemulsions are shown to exhibit unique material properties that have potential application in a broad range of fields of use. Suspoemulsions containing shear thickening fluids as immiscible blends exhibit a nontrivial shear thickening response for volume fractions as low as 10% of STF in the silicone emulsion. Measurements indicate that the system shows phase inversion and it is even possible to form materials with a cocontinuous microstructure with interesting, hysteretic, shear sensitive behavior. Novel STF containing composites with rubbers are formed by blending the shear thickening fluid within the rubber precursors and then adding the catalyzing agent. It was possible to contain STF in each of the silicones tested and the rubbers exhibited different behavior with incased STF. Shear thickening fluid was added to open cell polyurethane to create a Foam-STF composite which was found to exhibit an significant shear thickening response. Finally, STF composites were also formed by polymer blending, leading to materials with unique and superior performance as a consequence of the STF content and multiphase microstructure.

## Description

### Background of the Invention

Shear thickening fluids (STFs) are fluids whose viscosity increases with shear rate. Of particular interest are discontinuous STFs, which at high shear rates transform into a material with solid-like properties. A typical example of a discontinuous STF is a stabilized suspension of rigid colloidal particles with a high loading fraction of particles. Such systems have been studied for many different combinations of fluid matrix and particle size and compositions (Egres, R.G., Lee, Y.S., Kirkwood, J.E., Kirkwood, K.M., Wetzel, E.D., and Wagner, N.J., "Novel flexible body armor utilizing shear thickening fluid composites." Proceedings of 14th International Conference on Composite Materials. San Diego, CA. July 14-18, 2003), (Lee, Y.S., Wagner, N.J., "Dynamic properties of shear thickening colloidal suspensions," Rheol Acta 42,199-208 (2003), (Shenoy, S., Wagner, N.J., Bender, J.W., "E-FiRST: Electric field responsive shear thickening fluids," Rheo Acta 42,287-294 (2003)). The shear thickening in the colloidal suspension is due to the formation of jamming clusters, or hydroclusters, Lee, Y.S., Wagner, N.J., "Dynamic properties of shear thickening colloidal suspensions," Rheol Acta 42,199-208 (2003) bound together by hydrodynamic lubrication forces. The hydrocluster growth and collision eventually result in a percolated arrangement of the rigid particles across macroscopic dimension. This microstructural transformation leads to the bulk solid-like behavior. Upon relaxation of the applied stresses, the shear-thickened material typically relaxes to the low strain rate, fluid-like behavior (Eric D. Wetzel, Y. S. Lee, R. G. Egres, K. M. Kirkwood, J. E. Kirkwood, and N. J. Wagner, "The Effect of Rheological Parameters on the Ballistic Properties of Shear Thickening Fluid (STF) KEVLAR®Composites" NUMIFORM, 2004).

Shear-thickening fluids have been shown to have utility in the fabrication of energy dissipative devices, such as shock absorbers (Hesse, H., US Pat. No. 4,503,952), (Rosenberg, B.L., US Pat. No. 3,833,952), (Sheshimo, K., US Pat. No. 4,759,428) and more recently in the fabrication of ballistic fabric composites (Egres, R.G., Lee, Y.S., Kirkwood, J.E., Kirkwood, K.M., Wetzel, E.D., and Wagner, N.J., "Novel flexible body armor utilizing shear thickening fluid composities." Proceedings of 14th International Conference on Composite Materials. San Diego, CA. July 14-18, 2003), (Lee, Y. S., Wetzel, E. D., and Wagner, N. J., "The ballistic impact characteristics of KEVLAR® woven fabrics impregnated with a colloidal shear thickening fluid", J. Mat. Sci. 38, 2825-2833 (2003), (Eric D. Wetzel, Y. S. Lee, R. G. Egres, K. M. Kirkwood, J. E. Kirkwood, and N. J. Wagner, "The Effect of Rheological Parameters on the Ballistic Properties of Shear Thickening Fluid (STF) KEVLAR® Composites" NUMIFORM, 2004) and puncture resistant materials ("Stab resistance of shear thickening fluid (STF)-treated fabrics" by M. J. Decker, C. J. Halbach, C. H. Nam, N. J. Wagner and E. D. Wetzel, accepted for publication in Composites Science and Technology, August, 2006). There is considerable interest in incorporating STF's into other materials. PCT/US2004/015813 entitled "Advanced Body Armor using a shear thickening fluid" is incorporated by reference in its entirety for all useful purposes. Incorporation of STF's into plastics, rubbers and foams is discussed below. Shear thickening fluids may also contain fillers, see PCT application no. US06/04581 filed February 9, 2006, which is incorporated by reference in its entirety for all useful purposes.

Within the scope of this invention, the shear thickening fluid is defined as any fluid that exhibits an increase in viscosity with increasing shear rate or applied stress. Shear thickening is not shear dilatancy, which is a material property whereby the material's volume changes upon an applied stress or deformation. Shear thickening fluids, however, may exhibit dilatancy under specific conditions.

The shear thickening fluids may be concentrated dispersions of particulates within a fluid medium that exhibit an increase in viscosity with increasing applied stress, the particles within the fluid would preferably have a smallest dimension being less than 10 microns, more preferably, less than 1 micron, as well as true nanoparticles being below 100 nm in smallest dimension. Particles can be of any solid material, including spherical amorphous silica such as that produced via Stöber type synthesis, synthetic inorganic particles synthesized via solution precipitation processes such as precipitated calcium carbonate, or synthesized by gel-sol techniques (hematite, TiO2), or fumed silica, or carbon black. Natural inorganic particulates such as montmorillonite and kaolin clays can be dispersed in solvents and have been shown to exhibit shear thickening behavior. Ground mineral powders, such as quartz, calcite, talcs, gypsum, mica can be dispersed in liquid mediums and exhibit shear thickening behavior. The solid dispersed phase can also be polymeric in nature, such as plastisols generated through emulsion polymerization processes such as poly(methyl methacrylate) (PMMA), polystyrene (PS) microspheres such as those available from Polysciences or Bangs Laboratories, Inc. The solid phase can also be starch or other natural polymers.

There is significant interest in understanding the flow properties and microstructure formation of immiscible blends of liquids. Indeed, the processing and flow of immiscible blends, emulsions, and miniemulsions can affect the microstructure, which can in turn, affect the final material properties. Such blends, emulsions, and miniemulsions occur often in many systems and processes of practical importance. For example immiscible fluids are often used in direct mass contacting operation, such as extraction, while many foods, cosmetics, liquid soaps, and other consumer products are delivered or processed as mixtures of immiscible fluids. Immiscible polymer blends are formulated to achieve physical properties between the limits of the pure components, as well as imparting new characteristics arising from the presence of an interface.

From a theoretical standpoint the problem has not been solved, as how to describe the immiscible fluid mixtures and so one must rely on experimentation and semi-empirical models for predictions of rheological and material properties. Much work has been done to describe polymer blend systems (Utracki, L.A., "On the viscosity-concentration dependence of immiscible polymer blends," J. Rheol 35(8), 1615-1637 (1991)) so that industrial processing can be streamlined and flow morphology more aptly controlled.

The general realization of an emulsion, such as the ones under study, is treatment of one phase as continuous and the second as discrete droplets, either ellipsoidal or spherical in shape, or as both phases in a continuous form (known as co-continuous). The discrete phase droplets can deform, break up, aggregate, and coalesce under flow. Flow induced deformation is quite complex (Edwards, B.J., Dressler, M., "A rheological model with constant approximate volume for immiscible blends of ellipsoidal droplets," Rheol. Acta 42, 326-337 (2003)), (Wetzel, E.D., Tucker, C.L., "Droplet deformation in dispersions with unequal viscosities and zero interfacial tension," J. Fluid Mech. 426, 199-228 (2001)). A more in-depth discussion of droplet deformation can be found in Cavallo, Dagreou, S., Allal, A., Marin, G., Mendiboure, B., "Linear viscoelastic properties of emulsions and suspensions with thermodynamic and hydrodynamic interactions," Rheo Acta 41, 500-513 (2003), Edwards, or Wetzel (Wetzel, E.D., Tucker, C.L., "Droplet deformation in dispersions with unequal viscosities and zero interfacial tension," J. Fluid Mech. 426, 199-228 (2001), Wetzel, E.D., Tucker, C.L., "Microstructural evolution during complex laminar flow of liquid-liquid dispersions," J. Non-Newtonian Fluid Mech. 101, 21-41 (2001)). Even more important to the current work are the results of Kemick and Wagner (Kemick, W., Wagner, N.J., "The role of liquid-crystalline polymer rheology on the evolving morphology of immiscible blends containing liquid-crystalline polymers," J. Rheol. 43(3), 521-549 (1999)) showing that non-Newtonian fluids in emulsion can lead to dramatic changes in morphology under flow due to shear rate dependence of morphology.

The analysis of the emulsion under study is performed with the premise that the state of the discrete phase droplets can be understood through consideration of droplet breakup and coalescence (Doi, M., Ohta, T., "Dynamics and rheology of complex interfaces. I," J. Chem. Phys. 95, 1242-1248 (1991)), (Taylor, G. I., "The visocity of a fluid containing small drops of another fluid," Proc. R. Soc. London Ser. A 138, 41-48 (1932)), (Taylor, G.I., "The formation of emulsions in definable fields of flow," Proc. R. Soc. London Ser. A 146, 501-523 (1934)). Work by Rusu (Rusu, D., Peuvrel-Disdier, E., "In situ characterization by small angle light scattering of the shear-induced coalescence mechanisms in immiscible polymer blends," J. Rheol. 43(6), 1391-1409 (1999)) highlights in detail the complexities of the dynamic equilibrium between droplet coalescence and dispersion mechanisms. The droplet coalescence is broken down into four stages (i) the collision between the two drops; (ii) the drainage of the matrix film separating the colliding drops; (iii) the rupture of the matrix film; and (iv) the drop coalescence. The work on the shear-induced coalescence of droplets is considered to be consistent with previously understood mechanisms. However, the prediction of final morphology (particle size distribution and state of dispersion), in connection with the magnitude of deformation and stresses, is very difficult (Iza, M., Bousmina, M., "Nonlinear rheology of immiscible polymer blends: Step strain experiments," J. Rheol. 44(6), 1363-1384 (2000)).

Adding more of the dispersed phase can lead to the formation of a co-continuous morphology or phase inversion. Ageropoulos, G.N., Weissert, F.C., Biddison, P.H., Bohm, G.A., "Heterogeneous blends of polymers. Rheology and Morphology," Rubber Chem. Technol. 49, 93-104 (1976) concluded that the point of phase inversion is reached when the torque ratio of the components is equal to the component volume fraction ratio. Work by Utracki (Utracki, L.A., "On the viscosity-concentration dependence of immiscible polymer blends," J. Rheol 35(8), 1615-1637 (1991)) suggests the phase inversion point can be predicted based on the dependence of the viscosity on the volume fraction of monodispersed hard spheres in the matrix, as proposed by Krieger and Dougherty (Krieger, I.M., Dougherty, T.J., "A mechanism for non-Newtonian flow in suspensions of rigid spheres," Trans. Soc. Theol. 3, 137-152 (1959)). A more in depth analysis of the previous work in the area of phase inversion can be found in work by Astruc, M., Navard, P., "A flow-induced phase inversion in immiscible polymer blends containing a liquid-crystalline polymer studied by in situ optical microscopy," J. Rheol. 44(4) 693-712 (2000).

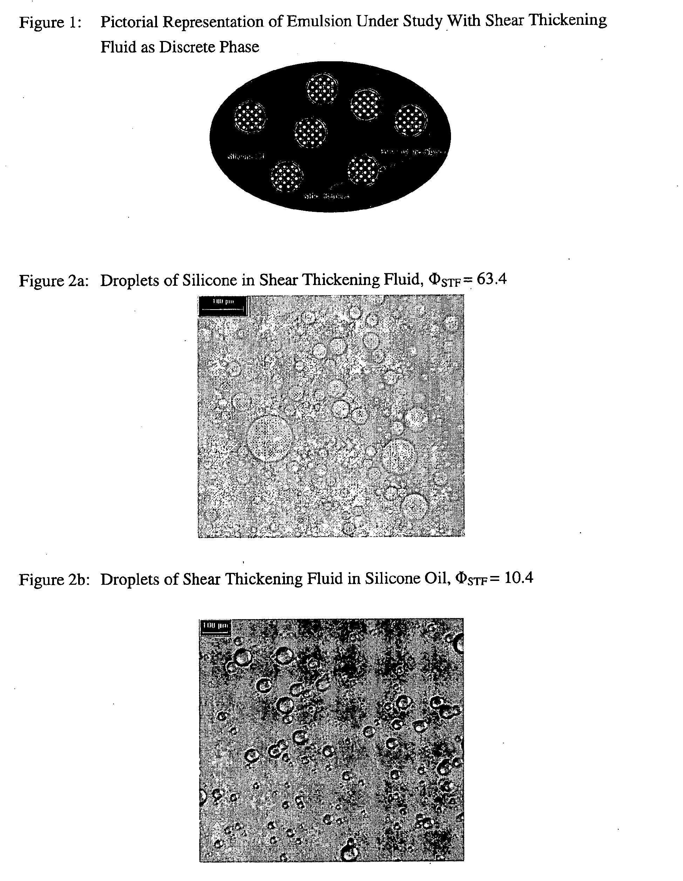

The blend or emulsion under study is a mixture of a shear thickening fluid comprised of particles in a suspending media, dispersed in an immiscible liquid (Figure 1). The solid particles are suspended in the suspending media at a sufficient loading to produce a shear thickening fluid. The particles are not added to the silicone phase and the emulsion can be reduced to two phases. Such realizations are known as *suspoemulsions,* which refer to the dispersion of a suspension in an immiscible liquid. Phase inversion, either by concentration or processing, can lead to the dispersion of the immiscible liquid into the shear thickening fluid, or the existence of co-continuous microstructure.

Previous literature is limited to a few investigations dealing with a shear thickening phase in an emulsion (Pal, R., "Non-idealities in the rheological behavior of emulsions," Chem. Eng. Comm. 121, 81-97 (1993)), (Tan, H., Tam, K.C., Jenkins, R.D., "Rheological Properties of Semidilute hydrophobically Modified Alkali-Soluble Emulsion Polymers in Sodium Dodecyl Sulfate and Salt Solutions." Langmuir 16, 5600-5606 (2000). Pal (Pal, R., "Non-idealities in the rheological behavior of emulsions," Chem. Eng. Comm. 121, 81-97 (1993)) studied the rheological behavior of pure component EDM oil, a non-discontinuously shear thickening fluid, and emulsions containing EDM. Results showed that with the addition of an emulsifying agent the oil could be emulsified in deionized water (Newtonian fluid) resulting in an emulsion with Newtonian viscosity behavior.

Studying the rheology of immiscible dispersions of a non-Newtonian liquid-crystalline polymer Kemick and Wagner found dramatic changes in morphology under flow due to shear rate dependence of morphology. It is therefore expected that a suspoemulsion containing the highly non-Newtonian shear thickening fluid will have a change in morphology under different flow conditions.

Such suspoemulsions can have useful applications in and of themselves due to their complex rheological properties. In addition, such suspoemulsions can be precursors to forming STF composite materials that can have useful applications. An example of the latter is a polymer blend containing STF inclusions, which is processed when the polymer is above or near to its melting transition such that it can be processed, but is used below this temperature where the polymer is more rigid. Another example is the formation of a suspoemulsion in a crosslinkable or polymerizable matrix fluid such that the STF composite is formed upon crosslinking or polymerization of the matrix fluid.

### Summary Of The Invention

One aspect of the invention is drawn to a composite which comprises a shear thickening fluid (STF) combined with an immiscible or partially miscible matrix material wherein the STF comprises a solvent and particles suspended in said solvent and the particles are colloidal particles having a particle size less than about 10 microns.

Another aspect of the invention is drawn to a composite which comprises a suspoemulsion, where the suspension in the suspoemulsion is a shear thickening fluid.

A further aspect of the invention is drawn to an immiscible blend of a polymer which comprises a polymer with an immiscible or partially miscible shear thickening fluid (STF).

A further aspect of the invention is drawn to a composite which comprises a shear thickening fluid (STF) in a foam.

### Brief Description Of The Figures

Figure 1 is a pictorial representation of emulsion according to the invention with shear thickening fluid as discrete phase.
Figure 2a illustrates droplets of silicone in shear thickening fluid, Φ_{STF}= 63.4. Figure 2b illustrates droplets of shear thickening fluid in silicone oil, Φ_{STF}= 10.4
Figure 3 illustrates the Viscosity-Shear rate experimental results for the STF, neat silicone fluid, and suspoemulsions.
Figure 4a illustrates silicone droplets under shear, Φ_{STF}=63.4. Figure 4b illustrates silicone in discrete phase shown at rest, Φ_{STF}=63.4. Figure 4c illustrates silicone in discrete phase under shear, Φ_{STF}=63.4, displaying droplet deformation.
Figure 5 illustrates time lapse photographs of sample subjected to shear and allowed to relax.
Figure 6 illustrates stress-time droplet evolution.
Figure 7a illustrates the discrete regions of STF formed in the silicone can be observed in a sample 18% mass STF. Figure 7b shows the ribs of shear thickening fluid formed in Silastic T2 (28% mass STF), highlighted with an arrow, upon curing. Figure 7c shows a large droplet of shear thickening fluid (white area) that was contained inside of a cured Silastic T2 silicone sample.
Figure 8 shows the results of compression testing of neat Foam and STF-foam composites for various rates of deformation.
Figure 9 shows micrographs of the phase morphology in STF polymer composites obtained by scanning electron microscopy.
Figure 10 shows ASTM Trouser Tear Test Results for STF-PO samples.

### Detailed Description Of The Invention

We show novel materials formed from shear thickening fluids in scaffolds, such as foams. We determined the rheological properties of an emulsion containing a shear thickening fluid immiscibly blended with silicone oil, forming a novel shear thickening suspoemulsion. The system is also hypothesized to follow standard shear droplet morphology, with competition between coalescence and breakup. We also formed such shear thickening suspoemulsions using STFs blended with melted polymer, such that upon cooling, the novel microstructures formed during processing were "frozen" in upon solidification. The latter yielded materials comprising encapsulated shear thickening fluids with greatly enhanced material properties.

### Solid-shear thickening fluid composites

One method comprises STFs in scaffold materials. Such scaffold materials would include, but are not limited to, open cell foams, such as those produced from polyurethanes, polyolefins or any polymeric material. Another porous scaffold material that would have utility is expanded polytetrafluoroethylene (ePTFE) such as found in several materials sold under the trade name GORE-TEX® (W. L. Gore and Associates, Inc.), or microporous or expanded polyethylene. Another scaffold material would be an engineered porous plastic or rubber, where inclusions are available to be filled partly or completely with STF.

Another type of scaffold material would include porous natural materials, including but not limited to wood, porous stone such as sandstone, pumice etc., and the skeletons of marine organisms including corals and sponges.

Alternatively, the scaffold material could be a building material such as concrete or asphalt. The presence of shear thickening fluid could absorb damaging impact energy within these materials which contribute to fatigue failure or catastrophic failure of articles made therefrom.

A second method by which a rubbery or solid (referred to herein as the second material)-shear thickening fluid composite containing discrete or co-continuous regions of shear thickening fluids, such as a suspoemulsion, can be fabricated is via mixing STF with an immiscible or partially immiscible liquid or fluid-like component (such as a molten polymer, or resin that can be foamed or crosslinked) that can subsequently be converted to a solid through heating, cooling, chemical reaction, etc. Candidate materials would preferably exhibit little solubility with the liquid suspending medium used to generate the shear thickening fluid, at least on the time scales and at the processing conditions required to transition the material from a liquid to a solid. Control of the morphology can be tuned based on choice of shear thickening fluid and second material liquid component, the relative compositions of the STF and second material liquid component, shear or processing conditions, and the addition of process adjuvants such as surfactants, fillers, block copolymers, nano and colloidal particles, such as used in pickering emulsions, and the like.

One type of second material would include reactive polymeric materials that cure or crosslink to form solids. Reactive polymers include polyurethanes that cure through the chemical reaction of components (polyols and isocyanates), epoxies that cure through the addition of a catalyst, and UV curable resins. A preferred second material of this type would be from the class of elastomeric or elastomeric gel materials, such as silicone rubber (cross-linked PDMS) or silicone gels and the like, which can be relatively low viscosity liquids prior to cross-linking, whereafter they form resilient materials with good rebound characteristics. A variety of elastomers exist to provide a wide range of properties such as chemical and solvent resistance, temperature resistance, and hardness (durometer). These materials could be mixed with shear thickening fluids at room temperature to disperse the shear thickening fluids adequately and to achieve the desired composite morphology or shear thickening fluid droplet size. The liquid-like second material could subsequently be cured, or the curing could be accelerated through heating or the addition of additional components that catalyze the reaction and transform the second material into a solid.

Another type of second materials would include melt processable polymers or thermoplastic elastomers (TPE). Melt processable, polymers include but are not limited to polyolefins such as polyethylene and polypropylene, nylon, polymethylmethacrylate, polyvinylchloride, polyethylene terephthalate (PET), polycarbonate and the like. Thermoplastic elastomers would include such as materials as those sold under the trade names Santoprene™ (Exxon Mobil Chemical), Hytrel® (DuPont Company), and Engage™ from DuPont-Dow Elastomers. In this instance; increased temperature is used to liquefy a polymeric material. At the processing conditions required to achieve the desired melt flow properties of the polymer second material, the shear thickening fluid would be compounded with the polymer melt to achieve the desired level of mixing and microstructure. The temperature would subsequently be reduced to generate the solid polymer-shear thickening fluid composite.

End use articles can be generated from the aforementioned novel materials through injection molding, thermoforming, extrusion, and conceivably any method used to fabricate articles from the second polymeric material alone as known to those skilled in the art.

Alternatively these materials could be incorporated as discrete laminar regions between layers of the second material, such as between layers of polymeric materials and composites (such as polycarbonate and fiberglass reinforced epoxy) glass, ceramic, or metal films or sheet. Such laminar composites could exhibit dramatically improved ballistic or impact related energy dissipation, as the compression associated with impact would initiate improved energy dissipation between the second material layers within the construction. The particles in the shear thickening fluid of the invention are preferably colloidal particles having a particle size less than 10 microns and more preferably less than one micron. The laminates formed are different than the laminates disclosed in WO 2004/012934 (WO '934). The laminates disclosed in WO '934 require a specific shape (corrugated egg crate shape). The invention can be practiced not using the specific shape required by WO '934.

The shear thickening composite materials are different than those disclosed by Plant (US 2004/0171321) as they describe a dilatant material impregnated into a resilient carrier. The dilatant material are dilatant compounds and putty and are distinct from the shear thickening fluids described in this work.

*Liquid-shear thickening fluid composites:* One embodiment of the invention relates to a composite liquid-liquid mixture, or blend, where the two liquids are immiscible or only partially miscible such that they develop a heterogeneous morphology, and where at least one component in the mixture is a fluid that exhibits a shear thickening transition, (increase in viscosity resulting from increased shear stress or shear rate). We have shown that blends of shear thickening fluids incorporated into a second fluid medium exhibit rheological behavior indicating their ability to impart improved energy dissipative capabilities to composites made there from.

Such a fluid may have utility in control and damping applications. One such application may be a mechanical limiting fluid that resists deformation beyond a certain applied stress or deformation rate. Such a fluid may have utility when incorporated as a coating, impregnated into or dispersed within a solid material. Such a fluid could serve as a layer between two materials such as glass, metals, or plastics to provide energy dissipative characteristics. One application for such a fluid would be to impregnate or imbibe it into a porous solid scaffold material. Such solid material structures would include, but are not limited to fiber yarns, woven fabric, spunlaced or spunbonded nonwoven fabric, an open cell foam (to form a co-continuous network with the solid open cell foam network/scaffold), or to exist as discrete droplets within a solid. The composition of the yarns or fabrics would include synthetic materials, such as polymers, elastomers, as well as inorganic fibrous materials. Polymeric fibers include high modulus polymeric fibers such as polyaramids poly(phenylene diamine terephthalate) sold by Dupont under the registered trademark KEVLAR®, nylon, polyester, Dacron etc. Elastomeric fibers include polyisoprene, other fibers included within the scope of this invention include high modulus inorganic fibers and/or fiber yarns and/or fabrics, or natural occurring fibers such as cotton, wool, hemp. etc. High modulus inorganic fibers and fiber yarns and fabrics include but are not limited to graphite, E-glass, S-glass, ceramics fibers etc.

The novel blend could be incorporated as discrete droplets or co-continuous phases within a solid material by methods described earlier for fabricating solid-shear thickening fluid composites.

### Distinction between our invention and dilatant energy absorbing materials

Palmer et al. [US 2005/0037189 A1, WO 03/055229 A2, WO 2005/000966 A1] describe an invention whereby a "polymer-based dilatant" is distributed into a solid, foamed synthetic polymer matrix to form a "self- supporting energy absorbing composite". Plant (US 2004/0171321) describes a dilatant material impregnated into a resilient carrier. These applications use a known, commercially available polymer (i.e., "silly putty") that dilates under strong deformation as a component in a composite material. These applications are limited in scope and are fundamentally different than what is proposed here, in that: A) *dilatant* materials expand in volume when subject to stress, while *shear thickening* materials are essentially incompressible and have a viscosity that increases with shear stress; B) the shear thickening materials consist of colloidal and nanoparticle dispersions, as opposed to " a material in which the dilatancy is provided by polymer alone or by a combination of polymer together with one or more other components, e.g. finely divided particulate material, viscous fluid, plasticizer, extender or mixtures thereof, and wherein the polymer is the principle component" [Palmer and Green, US 2005/0037189 A1,. Thus, the invention described herein is distinguished from the work of Palmer et al. and Plant by both principle and materials, and is not derivative thereof.

### Applications

Applications for shear thickening fluids incorporated into pads for sports equipment.
Bicycle, motorcycle helmet, construction hardhat and the like which incorporates padded regions between the outer shell and the wearers head containing shear thickening fluids either in suspoemulsions, impregnated in foams, existing as discrete droplets or stripes or layers within an elastomer, or as part of a co-continuous or interpenetrating network of shear thickening fluid network within a solid plastic or elastomeric material.

A mouth guard fabricated from a conformable polymer or elastomer containing discrete or co-continuous regions of shear thickening fluids would likely exhibit improved energy dissipation. Such an article could reduce the likelihood of concussion, dental damage, etc.

Conformable Pads incorporating discrete regions, dispersed droplets, co-continuous networks of shear thickening fluids within a solid polymeric or elastomeric second material could be incorporated into gloves that can serve to reduce vibration or protect the hands from a jarring impact. One possible application would be the wrist protection guards worn during roller skating and roller blading. Additionally, such conformable padding could be used to generate knee pads, elbow pads and the like for providing improved safety from impact to specific regions. The padding can be used in any other sport that requires padding, such as but not limited to baseball, football, hockey, lacrosse, fencing. Besides gloves, elbow and knee pads, other examples of uses of the padding include but are not limited to shin guards, shoulder pads, leg pads, chest protectors, and athletic cups.

A conformable cast material can be fabricated from the polymeric or elastomeric-shear thickening fluid composites containing discrete droplets, or co-continuous regions of shear thickening fluids. Such materials could provide improved protection by limiting movement (twisting, bending) of a broken bone, muscle strain, sprains, or injured limb (wrist, elbow, ankle, knee, neck, spine or the like. Such a material could also be used as a cast material worn while strains and sprains are healing similar to air casts to the ankle, wrist or the like which allows movement but protects against rapid twisting or impacts which could re-injure the region. Such materials can be of application in orthopedic applications, where protection from fall and impact of hips, knee and elbow and other joints is desired.

The novel conformable composite comprised of discrete droplets, or co-continuous networks of shear thickening fluids could be used in seat cushioning and neck supports in automobiles, airplanes, trains and the like to provide more protection during accidents. This would be particularly beneficial for protecting the spine and neck from injury such as from torque or whiplash.

Pads fabricated of conformable and resilient composites containing shear thickening fluids as discrete droplets or co-continuous networks within a plastic or elastomer second material could be positioned at high stress and/or frequently impacted regions such as beneath the heel and beneath the ball of the foot. The nature of the fluid within these types of pads could also be a large pocket of fluid directly local to the point of impact or potential point of impact. These pads could be incorporated directly into a sports shoe design or as part of a shoe insert to reduce impact during walking, running, jumping and the like. The pads can be used as an orthotic placed in the shoe. A potential energy dissipative construction for an athletic shoe would allow shear thickening fluid to pass through channels connecting pockets located beneath the ball of the foot and heel, allowing transfer of shear thickening fluid between both impact regions as a result of the natural heel-to-toe weight transfer associated with walking, running and the like. Such materials can be of military application in boots such as but not limited to paratrooper boots.

Mechanical components could be fabricated from solid materials containing shear thickening fluids as discrete droplets or regions or as a co-continuous network within the solid material. Smart components could be fabricated where the stiffness or hardness of a flexible component can change as a result of degree of deformation, such as from elongation, bending, torque, twisting, compression, or dependent on the rate of elongation, bending, torque, twisting, compression. Such components could have utility as part of a suspension which could stiffen in response to bending, etc.

The novel blends of shear thickening fluids and a second liquid material discussed earlier could have utility in several applications used as a medium to control mechanical actuation of one object relative to another. This material could be used as a shock absorbing medium, such as within the rotary shock absorber discussed by Hesse, US Pat. 4,503,952, the viscoelastic damper discussed by Seshimo (US pat. 4,759,428), or the tug resistant link discussed by McMahon et al. (US Pat. 5,712,011). Additionally, the novel energy dissipative blend could be used to control, attenuate, or facilitate the transfer of energy between two or more objects such as that associated with torque, translation and vibration. These novel composites could be used in hard drive and CD drive vibration or shock dissipation, or to protect from impact sensitive mechanical, electrical, or optical equipment.

### Examples:

### Example 1, Shear Thickening Suspoemulsion

### Figure 1 illustrates a representation of the suspoemulsions with shear thickening fluid (STF) as the dispersed phase

*STF-Suspoemulsion Preparation:* The first part of the two-part emulsion is a shear thickening fluid (STF) which comprises polyethylene glycol and silica particles. The fluid was prepared using amorphous silica powder with an average particle diameter of 450 nm (Nippon Shokubai KE-P50) dispersed in 200 MW Polyethylene Glycol (Clarient PEG-200), Table 1. The silica particles were first added to PEG at a weight fraction of 30% with the diluteness of the system aiding in particle dispersion. This mixture was then centrifuged for 2 hours and the supernatant removed, leaving a cake of close packed silica particles (Φ~64%). Very small amounts of PEG were added to the silica particles until the mixture reached the desired flow properties, higher additions of PEG at this stage would decrease the viscosity of the solution. PEG can be easily replaced by lower molecular weight solvents, such as ethylene glycol. Thermogravimetric analysis was conducted on the sample to determine the weight fraction of particles in this final solution, 59.52%, which was then used to determine the volume fraction of silica in PEG. All emulsions were formulated with the same 49 vol % silica shear thickening fluid.

**Table 1 : Material Properties**

| | p(g/cm3) | ηₒ(Pa-s) |
|---|---|---|
| Silica | 2.055 | - |
| PEG | 1.02 | 0.057 |
| Silicone Part A | 1.12 | 21.4 |

The second part was a silicone oil, acquired from GE Silicones (SLE5700-D1), and was chosen for its Newtonian viscosity behavior and high immiscibility in PEG. For the rheological testing only Part A of the two part polymerizable silicone was used. The silicone can be polymerized with the addition of the catalyzing agent, Part B.

The emulsions were prepared by weighing out a specific mass of each fluid in a 20mL glass scintillation vial and then mixing by hand with a spatula. The samples studied are given in Table 2, with a wide compositional range. The samples will be referenced by the volume fraction of shear thickening fluid contained, Φ_{STF}.

**Table 2: Emulsion Compositions**

| Mass of Shear Thickening Fluid (gm) | Mass of Silicone (gm) | Weight % STF | Φ_{STF} |
|---|---|---|---|
| 3.042 | 0.379 | 88.9 | 82.9 |
| 2.2796 | 0.7922 | 74.2 | 63.4 |
| 1.721 | 0.809 | 68.0 | 56.2 |
| 3.904 | 3.915 | 49.9 | 37.5 |
| 1.938 | 5.946 | 24.6 | 16.4 |
| 0.7048 | 3.6701 | 16.1 | 10.4 |

*STF-Suspoemulsion Structure:* The two components were mixed by hand and a sample of this emulsion plated onto a glass slide for inspection under an optical microscope; representative images are shown in Figures 2a and b. It was suspected that the absence of a mechanical mixer would create a very polydisperse droplet size due to the non-uniform power input (Kitade, S., Ichikawa, A., Imura, N., Takahashi, Y., Noda, I., "Rheological properties and domain structures of immiscible polymer blends under steady and oscillatory shear flows," J. Rheol. 41(5), 1039-1060 (1997)). Visual confirmation of the formation of two distinct phases enabled sizing of the disperse phase. The droplet size of the disperse phase as prepared was found to range between ~1 and 100 µm.

*STF-Suspoemulsion Rheology:* A 25mm cone and plate geometry (gap=0.0509 mm, angle=0.099 radians) was utilized on a strain-controlled rheometer (Rheometrics SR-5000) to determine the rheological properties of each emulsion and the pure components. Testing was performed at a constant 25 °C with a peltier and constant temperature water bath used for temperature control. The samples were subjected to a uniform force gap testing followed by a creep test at 5 Pa until the viscosity of the sample reached a steady state, approximately two minutes. This was done to insure homogeneity of the sample and to set a fixed shear history for each test. This constant preshear should result in an emulsion morphology at steady state as a balance between droplet breakup and coalescence. Stress sweeps were run on the rheometer with a maximum time of 30 seconds per data point and frequency sweeps were run without a time limitation for each data point. After completion of the rheological tests a portion of the used sample was then plated for observation under the optical microscope. The quick relaxation time of the sample made quantitative analysis of samples plated after testing in the rheometer inaccurate, as the system relaxed before the phase microstructure could be analyzed. The measurements, however, helped in qualitative understanding of the effects of shear flow on the sample morphology.

A simple shear cell was constructed by inserting sample between two glass microscope slides. The slides could then be sheared with respect to each other and the resulting fluid behavior observed under an optical microscope with image capturing software.

A more complete analysis of the shear thickening phenomenon for systems very similar to the one studied is given by Lee and Wagner (Lee, Y.S., Wagner, N.J., "Dynamic properties of shear thickening colloidal suspensions," Rheol Acta 42,199-208 (2003)) and the interested reader is referred to that manuscript for a thorough explanation of STF rheological behavior. Barnes (Barnes, H., J. Rheol. Vol. 33, 329 (1989)) provides an extensive, but not exhaustive, list of possible shear thickening fluids.

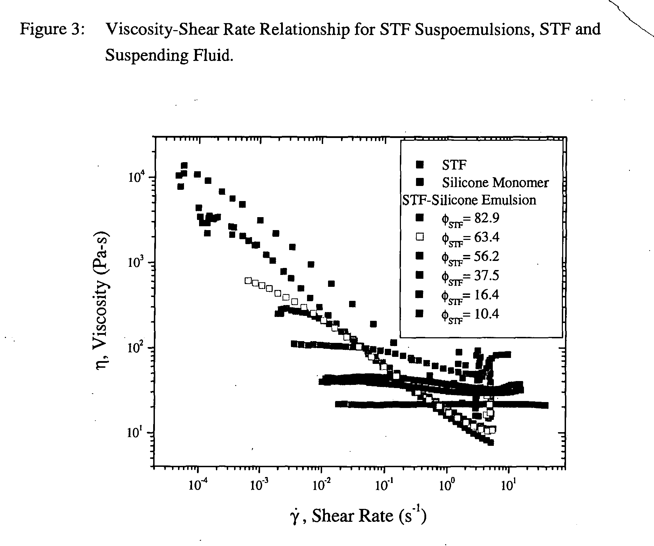

The viscosity as a function of both strain rate and stress for the neat materials and suspoemulsions are shown in Figure 3.

As can be seen the viscosity of the emulsion is highly dependent on the volume fraction of shear thickening fluid in the mixture and the shear stress imparted. The viscosity of each emulsion is a nontrivial combination of the pure component curves. At low shear thickening fluid volume fractions, the samples display Newtonian like fluid behavior at low stresses and a very small shear thinning region. At higher STF loadings the low shear viscosity more closely tracks that of the STF. The emulsions with the highest volume fractions of shear thickening fluid (Φ_{STF}= 82.9, 63.4, 56.2) also exhibit discontinuous shear thickening at increasingly higher stress levels while the lower volume samples exhibit shear thickening followed by a plateau and then a second shear thinning region.

The critical stress for shear thickening is defined as the stress at the minimum in the viscosity vs. shear stress curve at the onset of shear thickening, and is shown in Table 3.

**Table 3 Critical Stress Values for Shear Thickening as a Function of STF Phase Volume**

| Φ_{STF} | Critical Rate (S⁻¹) | Critical Stress (Pa) | Critical Viscosity (Pa-s) |
|---|---|---|---|
| 100 | 3.583 | 43 | 12.1 |
| 82.9 | 1.777 | 40 | 22.5 |
| 63.4 | 4.647 | 49 | 10.4 |
| 56.2 | 5.095 | 56 | 11.0 |
| 37.5 | 2.576 | 126 | 49.1 |
| 37.5 | 3.554 | 158 | 44.5 |
| 16.4 | 7.633 | 251 | 32.8 |
| 10.4 | 6.297 | 186 | 29.5 |

This is clear evidence that the STF phase in the novel STF suspoemulsions is able to exhibit shear thickening. The stress required for shear thickening is highest at low STF loadings.

Thixotropy in the form of hysteresis in the flow curves was observed at intermediate and low STF phase volumes. This is described in greater detail in U.S. application Serial Number 11/260,742 filed October 27, 2005 which again is incorporated by reference in its entirety including all the figures. Such hysteresis is a sign of shear sensitivity of the microstructure.

The viscosity-concentration relationship of the mixtures was determined by taking the viscosity of each component at constant stress values. This relationship is shown in Table 4

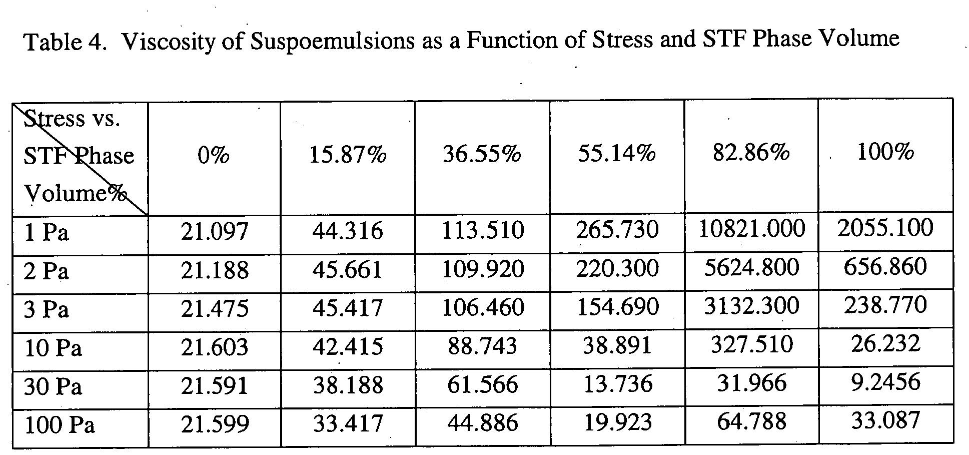

Once again a behavioral difference is seen as the volume fraction of shear thickening fluid is increased. At low STF loadings the effects of shear stress on viscosity are minimal, whereas at higher STF loadings, the nonlinear dependence of the STF component is evident in the emulsion viscosity.

Dynamic tests were run for all samples at both one and five radians per second so that the linear viscoelastic region could be determined. This is described in greater detail in U.S. application Serial Number 11/260,742 filed October 27, 2005, which again is incorporated by reference in its entirety including all the figures.. The low STF loading samples show minimal effects of increasing stress amplitudes, whereas the high STF loading emulsions show non-linear behavior typical for the STF component (Lee, Y.S., Wagner, N.J., "Dynamic properties of shear thickening colloidal suspensions," Rheol Acta 42,199-208 (2003)). There are seemingly few differences between the responses of the mixtures at the two different frequencies tested. The viscous contribution is seen to be an order of magnitude greater at the high frequency where as the elastic contribution is on the same order for both frequencies.

*STF-Suspoemulsion Structure by Optical Microscopy:* The samples were imaged to determine the continuous and discrete phases formed in emulsions with varied shear thickening fluid compositions. As shown in Figures 2a and 2b it was possible to create discrete phases of each component in a continuous phase of the other. An analysis of the response of the emulsions to shear was performed using the shear cell constructed of glass slides. A small amount of sample was plated between two glass slides allowing shear of the sample by movement of either slide while fixing the other. The shearing between plates was done by hand. The setup permits one to view in a direction perpendicular to the flow field.

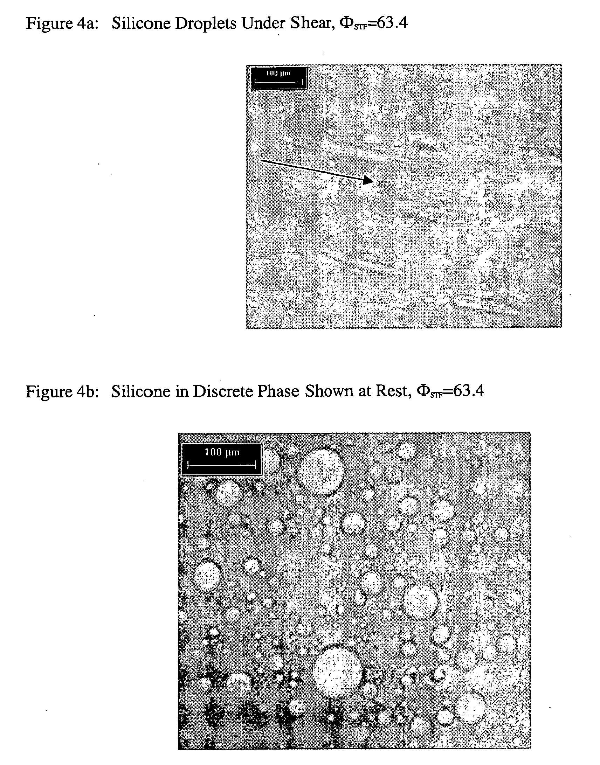

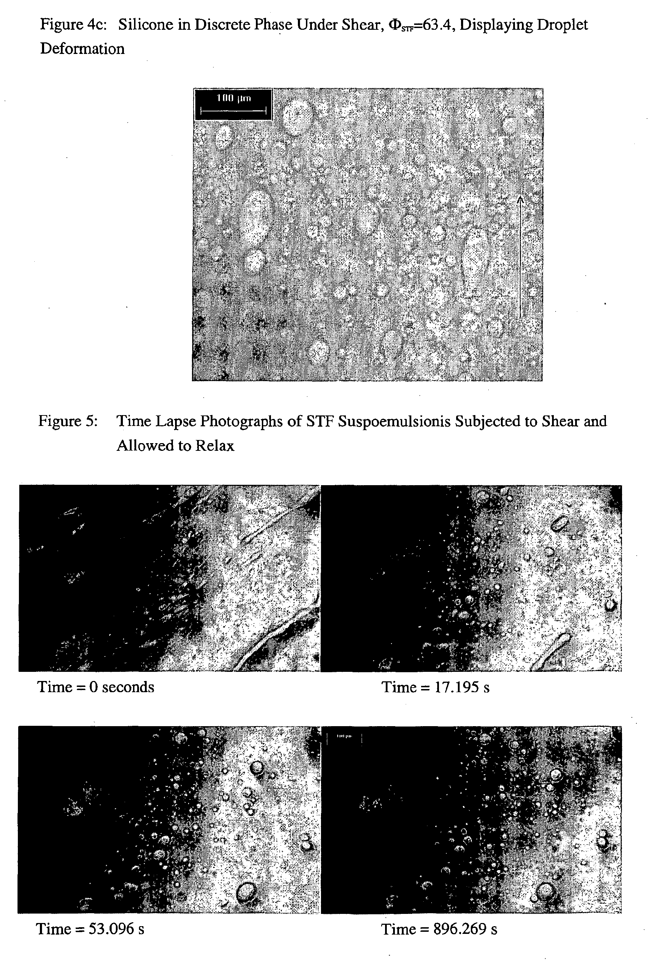

Figure 4a shows a sample with Φ_{STF}=63.4 under a stress that is not known, an arrow is added to indicate the direction of shear. What can be seen is the elongation of the silicone droplets under this shearing action. Figure 4b shows this same sample at rest and again under shear in 4c, establishing that the STF inclusions remain in a flowable form inside the suspoemulsion.

To further investigate whether the STF suspoemulsion can relax after deformation and shear thickening, a sample consisting mostly of shear thickening fluid, Φ_{STF}=63.4, was plated on top of a single glass slide (no cover) and subjected to a shear stress at t < 0. Once the stress was removed the state of the system was recorded using image-capturing software on the microscope. This is shown in Figure 5, with silicone occupying the discrete regions in a continuous shear thickening fluid matrix. The time stamps of when the pictures were taken are given and could be used to calculate the surface tension between the phases. Evident from the slides is the elongation of the discrete phases of silicone and the subsequent relaxation back into a spherical shape. Some of the elongated threads are observed to break into droplets. This overall behavior is expected as a lower energy state is reached with a decreased interfacial area and is in agreement with the predictions of Edwards, B.J., Dressler, M., "A rheological model with constant approximate volume for immiscible blends of ellipsoidal droplets," Rheol. Acta 42, 326-337 (2003).

### STF Suspoemulsion Discussion of Results

The rheological behavior of the emulsions is interesting as discrete phases of a shear thickening fluid are shown to influence the flow properties of a Newtonian fluid matrix at low concentrations of shear thickening fluid. The nature of the experimental method does not allow for visual confirmation of microstructure under shear, as would be possible in a glass Couette cell (Rusu, D., Peuvrel-Disdier, E., "In situ characterization by small angle light scattering of the shear-induced coalescence mechanisms in immiscible polymer blends," J. Rheol. 43(6), 1391-1409 (1999)). However, through simple analysis of the rheological behavior and pictures of the system at steady state an understanding of the structure and continuity of the system can be developed. Analysis can begin keeping in mind the key results of Figures 2a and 2b. Figure 2a shows that when small amounts of silicone are added to the shear thickening fluid discrete regions of silicone are formed. The same is true for small amounts of shear thickening fluid added to silicone, Figure 2b. It is then hypothesized that there is a phase inversion between a continuous phase of shear thickening fluid and a continuous phase of silicone at some intermediate volume fraction of shear thickening fluid.

Figure 3 displays the viscosity stress relationships of the emulsions and clearly shows the shear thickening behavior for each emulsion tested with flow curve characteristics dependent on volume fraction of shear thickening fluid. The discontinuous shear thickening observed in pure shear thickening fluid is also observed in the samples with a volume fraction of fifty-six percent shear thickening fluid. As the amount of shear thickening fluid decreases, the behavior changes as the fluids display a shear thickening transition followed by a second region of shear thinning at higher shear rates, Figure 3. These results partially confirm the hypothesis that samples with shear thickening fluid in the continuous phase will exhibit discontinuous shear thickening while samples with shear thickening fluid in the discrete phase will not. It is also evident that there is a different response for emulsions around the region where shear thickening fluid is half of the mixture by mass (Φ_{STF}=37.5). Also apparent is the change in shear thinning behavior for samples as the volume of shear thickening fluid is lowered, from a very steep and drastic shear thinning regime to a flatter, more Newtonian like fluid behavior.

[0001] The dynamic rheological testing of the emulsion can also be used to extract behavior differences between samples. Analysis of the loss modulus shows that for the samples with Φ_{STF}>37.5 there is a very steep shear thickening transition with increasing stress amplitude. In the sample where Φ_{STF}≤37.5 the shear thickening response is characteristically different and subdued from the pure shear thickening fluid. This response difference suggests that when that sample is at rest, as in small amplitude dynamic testing, the shear thickening response is different from the response under steady shear. The shear thickening response in the shear testing is more apparent for the low volume (Φ_{STF}=16.4, 10.4) shear thickening fluid samples than in the dynamic testing where the low volume fraction samples more closely resemble the pure silicone oil sample. This suggests the shearing of the sample affects the microstructure of the sample. A more in depth discussion of the dynamic properties of the shear thickening fluid response can be found in work done by Lee and Wagner (Lee, Y.S., Wagner, N.J., "Dynamic properties of shear thickening colloidal suspensions," Rheol Acta 42,199-208 (2003)).

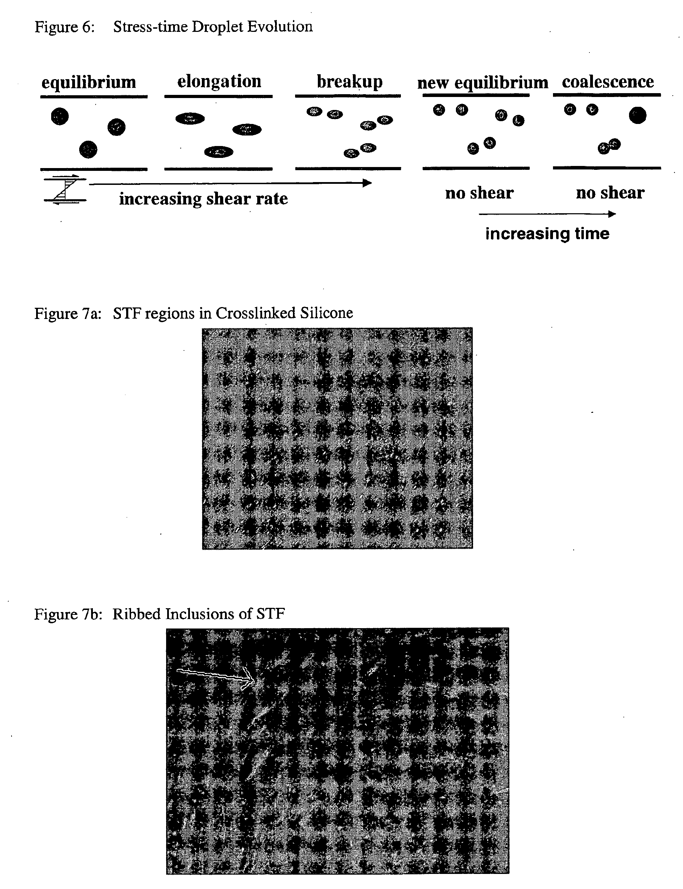

For emulsions with a low volume fraction of shear thickening fluid, Φ_{STF}=10, the silicone is the continuous phase and the shear thickening fluid is dispersed in discrete droplets. An important concept for understanding the flow field would be a characterization of the droplet break up and coalescence, Figure 6.

It is hypothesized that the emulsion droplets follow typical behavior under the applied shear stresses such that a dynamic equilibrium will be reached for a given steady flow between droplet breakup and coalescence. That leads to a droplet size distribution proportional to the power input, or applied stress, on the fluid. The higher the stress, the smaller the average droplet becomes, whereas when the applied stress is decreased the droplets coalesce under flow and the average size increases (Wagner et al. Doi-Ohta model for blends AICHE J. 45 (1999)). This becomes complicated by the presence of a shear thickening fluid in the droplet phase, as beyond a certain critical droplet stress the behavior of the STF will transfer from a liquid to solid-like phase. At this critical droplet stress the stress of the bulk phase is hypothesized to be the measured critical stress shown in Table 3.

At first consideration it is expected that the critical droplet stress required to initiate the shear thickening response is equivalent for emulsions of various volume fractions of shear thickening fluid. This would be expected as the shear thickening response is stress controlled. For emulsions with Φ_{STF} of around 65% and higher the critical stress value are equivalent to that of pure component shear thickening fluid. This supports the observation that the shear thickening fluid is the continuous phase at high concentrations of STF. It is not known, however, if silicone is also co-continuous at any of the volume fractions. It is remarkable that emulsions with lower STF loadings still show a clear signature of shear thickening. At the lowest loadings, the STF phase cannot be co-continuous and yet, a clear transition is evident even if it does not lead to the discontinuous behavior observed for the higher STF loadings. It is very significant that shear thickening is induced in the droplets, as this has never been previously reported.

Evidence for the possibility of microstructure formation within the emulsion under shear flow at high stress levels, such as a phase inversion from discrete to continuous, is found in Table 4. The viscosity for a constant stress value changes drastically with increasing composition. In the region of lower volume fraction the viscosity-concentration relationship is relatively independent of stress. In the region of high shear thickening fluid volume the relationship is more dependent on the stress. This is due to the shear thinning behavior of these samples. The flip from a simple relationship to a highly stress dependent one occurs when the volume fraction of shear thickening fluid is approximately one half. This suggests a phase inversion point occurring in this regime, presumably shifting from a continuous phase of silicone to one of shear thickening fluid.

The dynamic frequency sweeps for each material can be used to further support our observations about phase inversion. The crossover frequency, G'=G" (G'_{c}), for each sample was determined by finding the intersection of the two curves. For samples not showing crossover within the range of the testing limits the crossover frequency was determined by extrapolating the moduli curves to an approximate intersection. Where there is a continuous phase of silicone oil the dominant relaxation time of the system is close to the value of that of the pure component. Conversely, the relaxation time of the system is close to the value of pure shear thickening fluid when the volume fraction is higher than 50%, which supports phase inversion.

### Example 2 Colloidal Shear Thickening Fluid in Foams and Cured Rubbers Composites

*Sample Preparation:* The shear thickening fluid (STF) was prepared using amorphous silica powder (Nippon Shokubai KE-P50) dispersed in 200 MW Polyethylene Glycol (Clarient PEG-200). The average diameter of the silica particle was 450 nm and the density was determined to be 2.055 g/cm³ at 25 °C using a density meter (Anton-Paar DMA 48). The silica particles were first added to PEG at a weight fraction of 30% with the diluteness of the system aiding in particle dispersion. This mixture was then centrifuged for 2 hours and the supernatant removed, leaving a cake of close packed silica particles (Φ~64%). Very small amounts of PEG were added to the silica particles until the mixture reached the desired flow properties, higher additions of PEG at this stage would decrease the viscosity of the solution. Thermogravimetric analysis was conducted on the sample to determine the weight fraction of particles in this final solution, 59.52%, which was then used to determine the volume fraction of silica in PEG, 49 vol%.

Four sizes of polyurethane open cell foam were used, with an average pore size of 60, 70, 80, and 90 pores per inch (ppi). They were each received from Foamex International and have a density of ~0.1 gm/cm³.

A negative poisson ratio Teflon foam was acquired from W.L. Gore for testing purposes. The material construction does not allow the shear thickening fluid to wet the foam due to the surface tension. We anticipate improved performance using a STF that wets the foam.

Neat samples of various silicones were cured as were samples with encapsulated regions of shear thickening fluid. To encapsulate the shear thickening fluid the components were massed and mixed together by hand until an emulsion of the silicone and shear thickening fluid was generated. This emulsion was set into a mold and put in the oven at seventy degrees Celsius until cured. The oven was used to speed the kinetics of the polymerization.

A two-part polymerizable silicone oil, acquired from GE Silicones (SLE5700-D1), has been rheologically characterized in Part I of this paper. The silicone can be polymerized with the addition of the catalyzing agent, Part B, in a 50/50 weight ratio with Part A.

Two elastic silicones were tested, Silastic T2 and Silastic S with green curing agent (Dow Coming). Silastic T2 is a translucent high strength mold making silicone and is created using a 10:1 ratio. Silastic S is also a high strength silicone with the same mixing ratio. Both cure at room temperature and are immiscible with shear thickening fluid.

A two part room temperature foam was acquired from Quantum Foam Resins, LDF 8, with a mix ratio of 100:7. The density of the first part is ρ_{QF_A}= 1.2 gm/cm³ and plays an important part in the suspension of the shear thickening fluid, ρ_{STF}=1.67 gm/cm³. If the density ratio were too large the settling time of the shear thickening fluid would be on a time scale less than that of the curing process. A florescent dye (DayGlo Color Corp, D-824) was added to the shear thickening fluid to aid in visual recognition of shear thickening inclusions. The following foam compositions were formed, Table 17.

**Table 5: Closed Cell Foam Compositions, Quantum Foam Resins LDF 8**

| Φ_{STF} | Part A (gm) | Part B (gm) | Mass of Shear Thickening Fluid (gm) |
|---|---|---|---|
| 0 | 4.0528 | 0.3226 | 0 |
| 10 | 3.5655 | 0.2427 | 0.5351 |
| 25 | 3.0468 | 0.2051 | 1.4597 |
| 50 | 2.0814 | 0.1446 | 2.8718 |

*Testing: Controlled Compression:* The response of the materials to a controlled compression between two parallel plates was tested. The compression was done between two parallel plates on a rheometer (25mm Parallel Plate, Paar Physica MCR500) using the analog of an adhesive tack test. The velocity of the upper plate was controlled and the resulting force load recorded. The velocities were measured from 0.1 mm/s to 5mm/s.

The tests were performed on foam samples (Table 6) cut into a 25 mm diameter circle with a thickness of 0.25 inch. The shear thickening fluid was added to the foam until the shear thickening response could be felt throughout the foam with pressure applied between fingers. The amount of shear thickening fluid in the foam composite is less than the porosity of the foam, and there is air inside of the foam-STF composite.

**Table 6 : Polyurethane Based Open Cell Foam Composites**

| Sample | Mass Foam (gm) | Mass STF (gm) |
|---|---|---|
| 1 | 0.1773 | 0 |
| 2 | 0.1743 | 7.3557 |
| 3 | 0.1771 | 8.4029 |

*Drop Testing:* A ¾ inch diameter spherical ball bearing with a mass of 28.81 grams was used for impact testing. The impact was recorded using a digital camera. Impact testing was performed on the polyurethane based open cell foams with the compositions given in Table 6. The spherical ball bearing was dropped onto the target by hand from an approximate distance of one foot. The results were recorded using a digital camera (Sony P51) in quick snap mode exposing thirty frames per second.

*Silicone Rubbers:* The ability to encapsulate shear thickening fluid inside of the polymer matrix was studied by mixing quantified amounts of shear thickening fluid with the silicone precursors. For all silicone rubbers tested the shear thickening fluid was easily mixed into the precursor. In Figure 7a the discrete regions of STF formed in the silicone can be observed in a sample 18% mass STF. Figure 7b shows the ribs of shear thickening fluid formed in Silastic T2 (28% mass STF), highlighted with an arrow, upon curing.

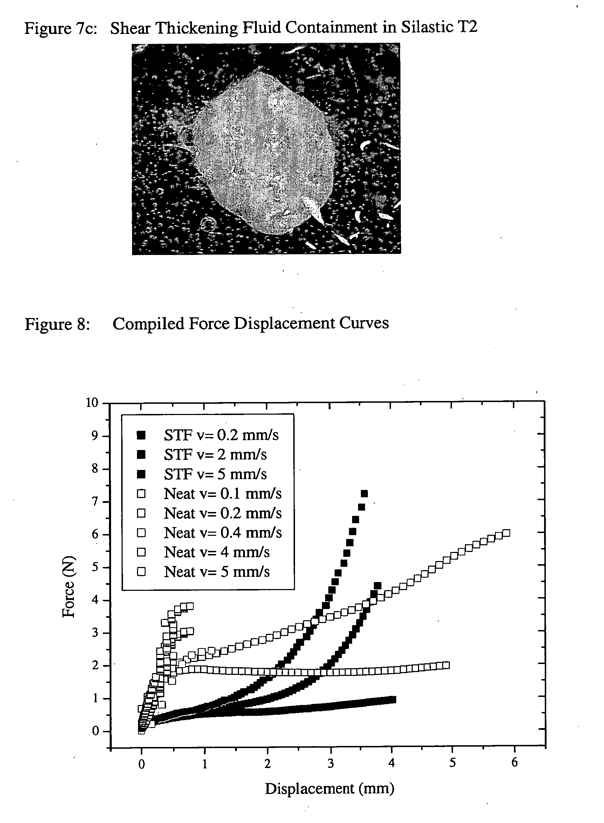

Figure 7c shows a large droplet of shear thickening fluid (white area) that was contained inside of a cured Silastic T2 silicone sample. Close observation of the shear thickening fluid displays cracks due to fracturing of the fluid when the rubber was stretched. These fissures disappear once the fluid has relaxed. There are many air bubbles contained within the cured rubber and this problem could be alleviated with the use of a vacuum chamber prior to curing the sample.

When the rubber sample shown in Figure 8c is stretched the region of shear thickening fluid visually changes from translucent to opaque. When fully relaxed the index of refraction of the shear thickening fluid is closely matched with that of the silicone and the droplet appears translucent. When a strain is applied to the sample the shear thickening fluid hardens, and turns into a region of opaqueness. If a large enough strain is applied the fluid can be torn apart and fissures such as shown above are readily formed. When the strain is removed the fluid relaxes back to its original translucent state.

*Open Cell Foam:* Shear thickening fluid was added to the open cell foams and found to wet very well. The shear thickening response of the shear thickening fluid in the open cell foam is observable by hand in both foams with large and small pores (60-100 parts per inch (ppi)).

The reaction of the material is that of the neat fluid. At fast impact speeds the foam appears to act like a solid and at low strain rates the composite can be easily compressed and the fluid is seen to flow out of the pores. This was further quantified with the impact testing shown later.

*Closed Cell Foam:* The addition of shear thickening fluid to the closed cell foam was found to inhibit the catalyzing agent used to foam and cure the resin. It formed a goop similar in consistency to baking dough. Even addition of twice as much catalyzing agent to the mixture does not allow the curing of the foam. We anticipate the successful incorporation of STF into the closed cell foam through the use of a catalyst that is not inhibited by the STF.

*Dynamic Testing of Foam STF Composites:* Upon slow compression of open cell foams containing STF at stresses between the plates below critical stress of shear thickening, the fluid was found to flow out of the foam and collect at the base. Upon retraction of the upper plate to the original position some of the fluid would be wicked into the foam, however not all was taken into the pores.

Dynamic tests were performed on closed cell foam composites with results reported in U.S. application Serial Number 11/260,742 filed October 27, 2005, which again is incorporated by reference in its entirety including all the figures.. Analysis of the dynamic properties of a similar shear thickening fluid can be found in Lee and Wagner (Lee, Y.S., Wagner, N.J., "Dynamic properties of shear thickening colloidal suspensions," Rheol Acta 42,199-208 (2003)). There was a large amount of slip occurring at the plate-foam interface at high rotation angles. The amount of slip was not quantified but could be eliminated if the foam were to be attached to the plates using an adhesive. Foam was observed to fail mechanically at high stresses. However, for the STF-Foam composite there is a shear thickening effect observed at high stress, such that the *STF-Foam composite was observed to increase in both elasticity and viscosity,* in contrast to the Foam itself. It should also be noted that the shear thickening fluid was observed to thicken visually at these high stress levels.

Both neat silicone and STF-Silicone composites were tested at various levels of initial force load. The same problems were encountered for the silicone as in the open cell foams. There was a tremendous amount of slip present suggesting another testing method may be more appropriate.

*Compression Testing:* The force required to compress open cell foams impregnated with shear thickening fluid is compared to the compression of the same neat open cell foam. The results for the neat foam and STF-Foam are shown for the different velocities in Figure 8.

Interestingly the STF modifies the foam response in a somewhat unexpected manner, allowing the foam to be more "flexible" at low rates while resisting deformation at higher rates. These results suggested interesting application and as a consequence, drop impact testing was performed.

*Impact Testing:* The response of both neat and impregnated open cell foams was tested against the impact of a stainless steel ball bearing. The impact of the bearing on the two different STF-Foam composites was recorded by digital camera as shown in U.S. application Serial Number 11/260,742 filed October 27, 2005, which again is incorporated by reference in its entirety including all the figures.. The rebound height of the bearing is noticeably subdued for the STF-*foam and almost all of the impact energy is absorbed, a response expected from an inelastic solid.*

*Discussion of Results -* The mixing and curing of these rubbers (GE Silicone, Silastic T2, Silastic S) worked well. When mixed with the shear thickening fluid discrete inclusions of STF could be formed. This work has shown that containment of shear thickening fluid within a polymer composite is possible and that the STF remains active.

Compression measurements and drop testing is conclusive that there is an exploitable response of the STF-Foam system. There is an obvious visual difference in the impact of an open cell foam impregnated with shear thickening fluid. This energy absorption is noticeable and possibly exploitable for practical application. There is an apparent "hardening" of the foam during the impact as the shear thickening fluid transitions from its fluid to solid-like state.

The results of the dynamic rheological tests showed a shear thickening of the viscous modulus in the open cell foam-STF composite but no clear result of the STF rubber composites. It is not clear what the actual strain on the sample was because of the large amount of slip present between the parallel plates and the sample. Further study would include the use of disposable plates so that the sample could be attached, removing any possibility of slip.

### Example 3 Shear Thickening - Polymer Blends

*Blend Preparation:* Suspoemulsions of STFs in polymer melts also show useful and novel properties. The same PEG-based STF was prepared as stated in the previous two examples and blended with an ethylene-octene copolymer (Engage® 8200, DuPont-Dow Elastomers). Blending was performed at 80 °C using a Haake Rheocord with a small counterrotating mixing chamber at 200 rpm for 2 minutes. The resultant STF-polyolefin was cooled and observed to be an elastic solid. Samples for tear testing and SEM characterization were prepared using a Carver press with a custom made die. The compression molding was performed at 80 °C for 15 minutes melt time and 15000 lbs. compression with 10 minutes annealing.

The blends were characterized by pressing bars of 45x12x3mm of solid material for torsional rheological testing and films of 2mm thickness for Trouser Tear Method for Tear-Propagation Resistance of Plastic Film according to ASTM D 1938. A miniInstron was employed at a separation rate of 250 mm/min. Scanning Electron Microscopy (SEM) was performed to characterize the blend morphology by cutting the bars with a razor blade to expose surface.

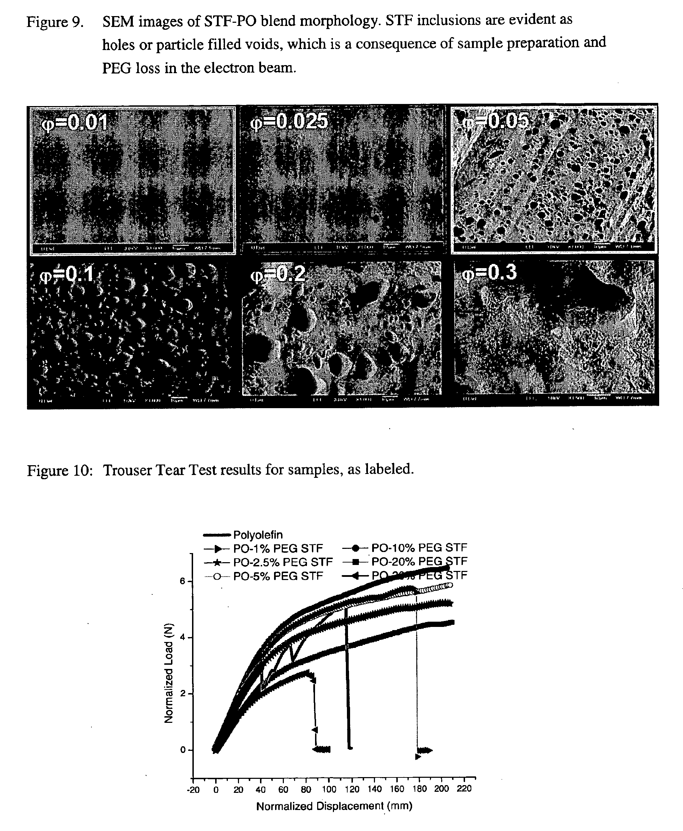

Figure 10 shows micrographs of the phase morphology obtained by scanning electron microscopy. Clearly the blend morphology has the STF phase dispersed in the matrix polymer, showing that the blending procedure is successful in producing morphology with micron-sized features. The STF inclusions are polydisperse with a size that increases with STF loading. As the STF loading reaches 30% by volume, significant coalescence of the STF inclusions is observed.

*Mechanical Testing:* Torsional rheological testing performed at room temperature using an ARES rheometer equipped with the torsional testing tooling. All samples showed a higher elastic modulus than shear modulus, and the modulus is observed to increase with loading of the STF, with a maximum at 1 vol % of the STF phase. Table 7 shows the elastic modulus at 0.5 % strain amplitude and 1 hz oscillation frequency, showing that the modulus increases with the addition of STF and then, decreases.

**Table 7 Elastic Modulus of Polyolefin STF blends at room terperature measured in torsional testing at 0.5% strain amplitude as a function of STF phase volume in the blend.**

| ϕ | G' at 1 rad/s |
|---|---|
| 0 | 3.994E6 |
| 0.010 | 4.094E6 |
| 0.025 | 3.473E6 |
| 0.050 | 3.502E6 |
| 0.100 | 3.147E6 |
| 0.300 | 2.964E6 |

*Tear Testing:* Representative tear test (ASTM D 1938 standard) results are shown in Figure 10, where it is seen that neat polyolefin and 1 vol% STF blends tear through, whereas 2.5, 5, 10 and 20 vol % do not fail during the course of the experiment.

Higher STF loadings lead to failure. Clearly, the presence of STF inclusions in the PO leads to substantial enhancement in tear resistance.

Table 8 shows the energy dissipated during the tear testing, which is defined as the area under the force versus displacement curves shown in Figure 12.

**Table 8 Energy dissipation during Tear Tests.**

| Volume Fraction of STF Phase | Energy Dissipated During Tear Test (J) |
|---|---|
| 0.01 | 0.64 |
| 0.025 | 0.83 |
| 0.05 | 0.97 |
| 0.1 | 0.89 |
| 0.2 | 0.67 |
| 0.3 | 0.06 |
| 0.01 | 0.64 |
| 0.025 | 0.83 |

Blends with 5 vol% STF dissipate the highest energy during this test, and this value is more than 3 times higher than the neat polyolefin.

Table 9 displays the maximum load achieved and the maximum extension.

**Table 9 Tear Testing Results for Maximum Load and Maximum Extension**

| Volume Fraction of STF Phase | Maximum Load (N) | Extension at Maximum Load (m) |
|---|---|---|
| 0.01 | 5.3 | 0.1568 |
| 0.025 | 5.4 | 0.2033 |
| 0.05 | 6.3 | 0.2073 |
| 0.1 | 5.9 | 0.2068 |
| 0.2 | 4.6 | 0.208 |
| 0.3 | 1.8 | 0.0642 |

The latter is limited by the instrument to 0.2 meters, and so the true maximum extension achievable is at least this high if not higher for the STF-PO blends that do not fracture. The maximum load achieved is for the 5 vol% STF-PO blend, and the maximum extension is reached already for the 2.5 vol% blend. The presence of STF inclusions increases the maximum load by over 20% and the maximum extension to >75% above the performance of the neat PO.
ASTM D 882 tensile elongation tests were performed using the miniInstron with serrated grip faces at an initial grip separation of 50 mm and an elongation rate of 250 mm/min. The results, shown in Table 10 shows that the 1 vol% STF-PO blend has the highest shear modulus and the 10% STF-PO blend has the Young's modulus.

**Table 10 Elastic Shear Modulus G' and Young's Modulus of STF-PO blends.**

| Volume Fraction of STF Phase | G' (100 Rad/s) (MPa) | Young's Modulus (MPa) |
|---|---|---|
| 0 | 4.7 | |
| 0.01 | 4.78 | |
| 0.025 | 4.33 | |
| 0.05 | 3.87 | 6.07 |
| 0.1 | 3.5 | 7.11 |
| 0.2 | 3.65 | 5.24 |
| 0.3 | 3.45 | |

Further, the neat PO, not shown, fails at the grip and does not extend. This is further evidence of the strengthening and toughening effect of the STF inclusions during deformation of the PO blends.

### SUMMARY

We have demonstrated a novel composite material comprised of a shear thickening fluid (STF) blended or integrated with an immiscible or largely immiscible matrix material. As shown, the matrix material can be a liquid, thus forming a novel suspoemulsion where one phase is shear thickening, which imparts novel rheological behavior. This behavior is a consequence of the STF material's transition at high stresses or shear rates, but also is shown to depend on the state of dispersion of the STF phase. The novel rheology includes a stiffening along with increased rate of energy dissipation at high stresses or shear rates, as observed in both steady, transient, and dynamic oscillatory experiments. The matrix material can also be a foam or crosslinked rubber, where the STF phase is dispersed therein or vice versa. The formation of this composite can be formed by reactive polymerization or crosslinking in the non-STF phase. The matrix material can also be a thermoplastic where the STF is mechanically or otherwise blended into the matrix material while the matrix material is in the molten state, which then solidified upon cooling to the temperature of use. Such novel materials exhibit unique dynamic behavior and show enhancement in mechanical properties and energy absorption upon mechanical impact, as well as enhanced tear resistance and elongational strength.

All the references described above are incorporated by reference in its entirety for all useful purposes.

While there is shown and described certain specific structures embodying the invention, it will be manifest to those skilled in the art that various modifications and rearrangements of the parts may be made without departing from the spirit and scope of the underlying inventive concept and that the same is not limited to the particular forms herein shown and described.

## Claims

1. A composite which comprises a shear thickening fluid (STF) combined with an immiscible or partially miscible matrix material wherein the STF comprises a suspending fluid and particles suspended in said suspending fluid and the particles are colloidal particles having a particle size less than about 10 microns.

2. An emulsion which comprises a suspoemulsion, where the suspension in the suspoemulsion is a shear thickening fluid.

3. An immiscible blend of a polymer which comprises a polymer with an immiscible or partially miscible shear thickening fluid (STF).

4. A composite which comprises a shear thickening fluid (STF) in a foam.

5. The composite as claimed in claim 1, which further exhibits both increased elasticity and/or energy dissipation under shear deformation or applied stress(es).

6. The emulsion as claimed in claim 2, which further exhibits shear thickening under shear deformation or applied stress(es).

7. The polymer as claimed in claim 3, which further exhibits increased energy dissipation under shear deformation or applied stress(es).

8. The polymer as claimed in claim 3, which further exhibits increased strength under shear deformation or applied stress(es).

9. The polymer as claimed in claim 7, which further exhibits increased strength under shear deformation or applied stress(es).

10. The composite as claimed in claim 4, which further exhibits increased energy dissipation under shear deformation or applied stress(es).

11. The composite as claimed in claim 4, which further exhibits increased strength under shear deformation or applied stress(es).

12. The composite as claimed in claim 10, which further exhibits increased strength under shear deformation or applied stress(es).

13. The emulsion as claimed in claim 2 wherein the non-STF phase is a polymeric liquid.

14. The emulsion as claimed in claim 2 where the non-STF phase is a small molecule liquid, which could be water, organic solvents, or natural or synthetic oils.

15. The polymer as claimed in claim 3 where the immiscible matrix material is a crosslinkable resin that forms a solid upon crosslinking.

16. The polymer as claimed in claim 3 where the immisible matrix is a resin and foaming agent such that it can be cured to form a foam.

17. The polymer as claimed in claim 3, wherein the polymer comprises thermoplastic or thermoset polymer.

18. The composite as claimed in claim 4, where in the foam is open cell foam.

19. The composite as claimed in claim 4, where in the foam is closed cell foam.
